# EUROPEAN PATENT APPLICATION

(11) **EP 0 599 037 A2**
(43) Date of publication of application: **01.06.1994**
(21) Application number: 93116382.8
(22) Date of filing: 09.10.1993
(51) Int. Cl.: C03B 11/16, C03B 23/00

(54) **Molding machine for making an optical element and method of making the same**

(30) Priority: 13.10.1992 JP 274015/92
(71) Applicant: MATSUSHITA ELECTRIC INDUSTRIAL CO., LTD., Kadoma-shi, Osaka-fu, 571 (JP)
(72) Inventor: Murata, Jun, Yao-shi, Osaka-fu 581 (JP); Sunohara, Masaaki, Nishinomiya-shi, Hyogo-ken 662 (JP); Nakamura, Syoji, Hirakata-shi, Osaka-fu 573 (JP); Yoshimura, Munehiro, Hirakata-shi, Osaka-fu 573 (JP); Sugino, Akihiko, Neyagawa-shi, Osaka-fu 572 (US)
(74) Representative: Eisenführ, Speiser & Partner

(57) **Abstract**

A molding machine for making an optical element by introducing an optical raw material into a mold assembly comprising first and second molds, heating to soften the optical raw material and applying pressure to the softened optical raw material. The machine comprises a measuring instrument for measuring either the amount of displacement of the optical raw material or the temperature of one of the optical raw material and the mold assembly during a course of molding, and an arithmetic unit for selecting molding conditions during steps subsequent to the measurement and to transmit to a machine control unit molding conditions to be modified. The machine control unit is operable to transmit to the molding machine the molding conditions to be modified which have been selected by the arithmetic unit. A method executed by the molding machine and an optical element obtained therefrom are also disclosed.

## Description

### BACKGROUND OF THE INVENTION

### (Field of the Invention)

The present invention relates to an optical element, to a method of molding the optical element and also to a molding machine designed to practice the molding method to provide the optical element.

### (Description of the Prior Art)

An optical element such as, for example, a lens or a prism has long been manufactured by grinding an optical glass block. This traditional grinding method is being superseded by a number of molding methods in which an optical raw material introduced in a mold cavity is heated while pressurized to provide an optical element. In order to accurately control the weight of the resultant optical element, the optical raw material is preferably in the form of a cylindrical glass block which requires a simplified preparatory processing and is therefore inexpensive.

For example, the Japanese Laid-open Patent Publication No. 60-246231, published in 1985, discloses a method of molding the cylindrical glass block. In general, when the optical element is to be made by means of a press molding technique, the optical raw material is cut to a predetermined size and is then preparatorily heated to a softening point of glass. The preparatorily heated optical element is then introduced into a mold cavity defined between upper and lower molds having respective recesses so designed as to define a final shape of the optical element when the upper and lower molds are clamped together. The optical element introduced into the mold cavity is molded by compression within the mold cavity at a predetermined temperature.

The shape of the optical raw material for the optical element should preferably be as simple as possible such as described above, in terms of the manufacturing process and the cost of processing the material, an example of which may be a cylindrical block formed by cutting to a predetermined width a glass rod which has been ground to a predetermined diameter by means of, for example, a centerless grinding process. It has however been found that molding of such a cylindrical glass block brings about a problem in that edges of the cylindrical glass block tend to be deformed earlier than the remaining portion of the cylindrical glass block in contact with walls defining the respective mold recesses, resulting in a formation of closed spaces each between one surface of the cylindrical glass block and the bottom of each of the mold recesses. Once these closed spaces are formed, they remain within the mold cavity until completion of the molding of the optical element, that is, until the upper and lower molds are subsequently separated from each other to eject the completed optical element. The consequence of this is that the respective shapes of the mold recesses, which are determinative of the shape of the eventually formed optical element, are not faithfully transcribed to the cylindrical glass block having been molded, and therefore, the resultant optical element becomes defective.

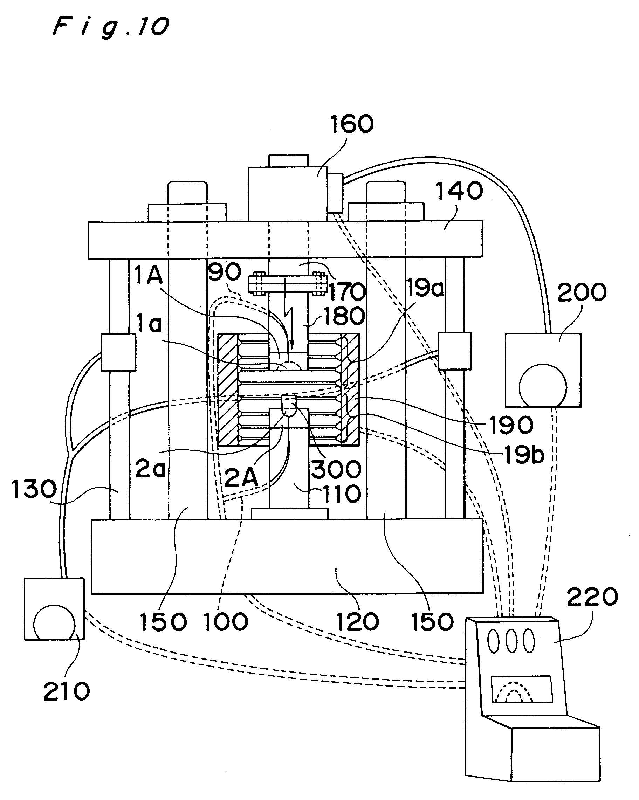

To avoid a problem of improper transcript of the shapes of the mold recesses to the cylindrical glass block, the prior art molding machine is so designed as shown in Fig. 10, reference to which will now be made for the discussion of the problem.

The molding machine shown in Fig. 10 comprises a stationary lower mold 2A stationarily mounted on a base 120 through a connecting rod 110 and having a lower mold recess defined therein, and a movable upper mold 1A carried by a piston rod 170 through a connecting rod 180 and having an upper mold recess defined therein. An optical glass block 300 seated in the lower mold recess is heated by a heater 190 to a required molding temperature. After the heating of the optical glass block 30 to the required temperature, the upper mold 1A is lowered to contact the optical glass block 300. Thereafter, the upper mold 1A undergoes a vertical oscillatory motion while applying a pulsating pressure to the optical glass block. This is carried out by the use of, for example, a servo pulsar or pulsator 160. The application of the pulsating pressure is continued until the optical glass block is deformed 90% relative to the initial shape thereof, and the remaining 1% deformation is carried out a constant application of the pressure while the optical glass block has been heated to the required molding temperature. The molding machine is powered off when 100% deformation of the optical glass block 300 has been completed, and the upper and lower molds are, after the temperature has lowered sufficiently, separated to remove the optical element.

According to the prior art method, where the molds are replaced with different molds, and since the extent to which a surface is oxidized varies with the processing accuracy and/or the frequency of use, a pattern of distribution of temperature in the optical glass block varies as a result of difference in thermal conductivity. Accordingly, even under the same molding conditions, a desired accuracy cannot be obtained depending on the type of the mold assembly and, also, the time during which one cycle of molding is carried out is relatively long enough to result in an increased cost.

Even where molding is carried out by the use of a plurality of mold assemblies, the extent to which a surface is oxidized varies with the processing accuracy and/or the frequency of use and, therefore, a pattern of distribution of temperature in the individual optical glass blocks varies as a result of difference in thermal conductivity. Accordingly, even under the same molding conditions, a desired accuracy can not be obtained depending on the type of the mold assembly and, also, the time during which one cycle of molding is carried out is relatively long enough to result in an increased cost.

Also, where glass cobs prepared from a molten glass are employed each for the optical raw material, the glass cobs usually have different weights and irregular surfaces and, therefore, the temperature tends to vary from one glass cob to another during the molding. Because of this, the resultant optical element is susceptible to thermal shrinkage to an extent as to make it difficult to exhibit desired optical characteristics.

### SUMMARY OF THE INVENTION

The present invention is intended to provide an improved molding machine effective to mass-produce optical elements efficiently and accurately at a substantially reduced cost.

It is a related object of the present invention to provide an improved method performed by the improved molding machine for making an optical element efficiently and accurately at a substantially reduced cost.

It is also a related object of the present invention to provide an improved optical element manufactured by the improved molding machine according to the improved molding method.

For accomplishing these objects, the present invention is featured in that, during an execution of the method comprising a step of inserting an optical raw material between first and second molds, a step of heating the optical raw material to soften and a step of applying pressure to the softened optical raw material by clamping one of the first and second molds to the other thereof, either the amount of deformation of the optical raw material being molded or the temperature of one of the optical raw material being molded and the mold assembly is measured so that at least one of molding conditions to be employed subsequent to the measurement can be controlled.

According to the present invention, even where a plurality of mold assemblies are employed, or even where a surface condition and/or the weight vary from one optical raw material to another, the resultant optical element can exhibit considerably improved optical characteristics.

Because of the feature of the present invention discussed above, the present invention brings about the following advantages. Measurement of either the amount of deformation of the optical raw material being molded or the temperature of one of the optical raw material being molded and the mold assembly provides parameters with which at least one of such molding conditions as molding pressure, pressure applying time, pressure release time and frequency of pressure application, to be employed subsequent to the measurement can be controlled. Accordingly, even where the mold assemblies and the optical raw material have variation, the resultant optical element can exhibit considerably improved optical characteristics.

### BRIEF DESCRIPTION OF THE DRAWINGS

This and other objects and features of the present invention will become clear from the following description taken in conjunction with preferred embodiments thereof with reference to the accompanying drawings, in which like parts are designated by like reference numerals and in which:
Fig. 1 is a schematic sectional view of a molding machine for performing a molding method of the present invention;
Figs. 2(a-1), 2(b-1) and 2(c-1) are schematic top plan views showing a delivery apparatus used in the molding machine for performing the molding method of the present invention;

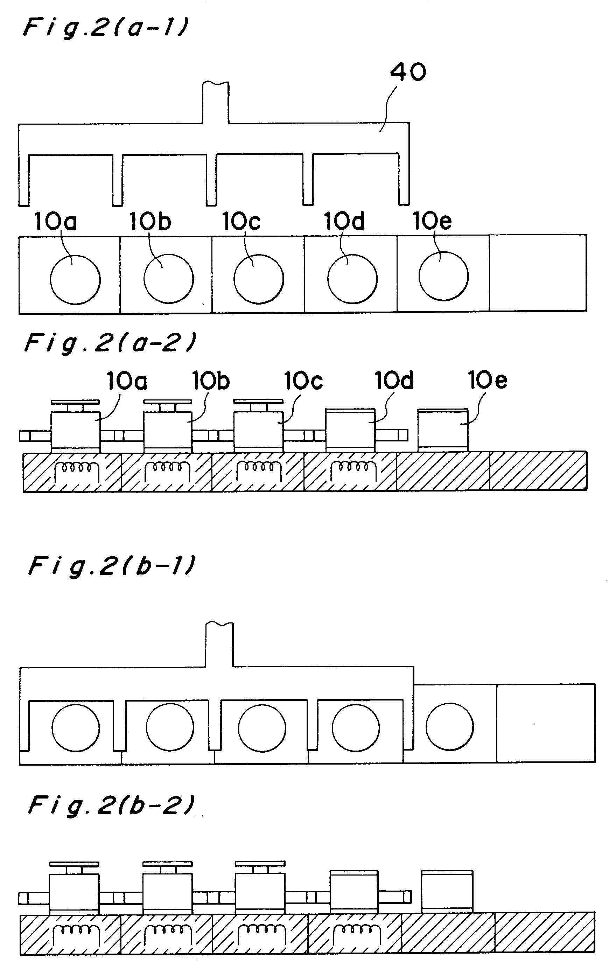

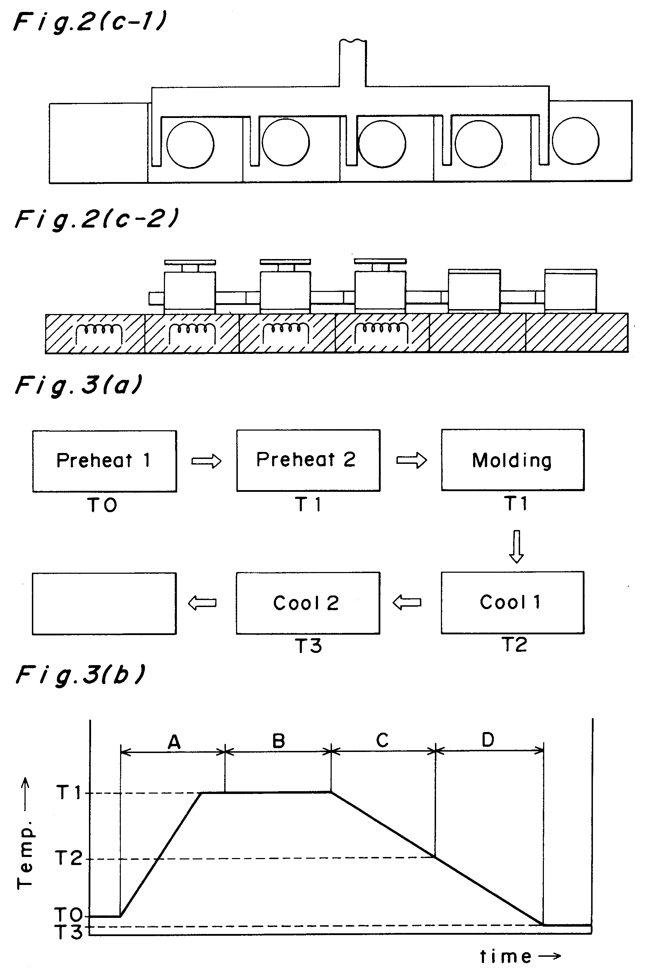

Figs. 2(a-2), 2(b-2) and 2(c-2) are schematic elevational views showing the delivery apparatus used in the molding machine for performing the molding method of the present invention;
Fig. 3(a) is a block diagram showing sequential steps of the molding method of the present invention;
Fig. 3(b) is a chart showing a molding profile;

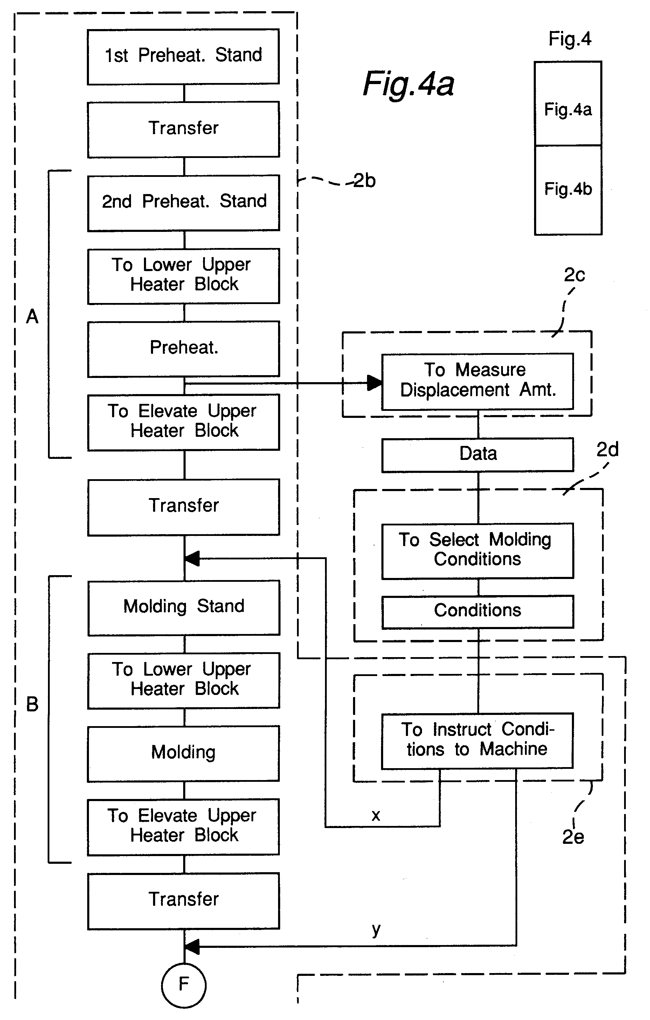

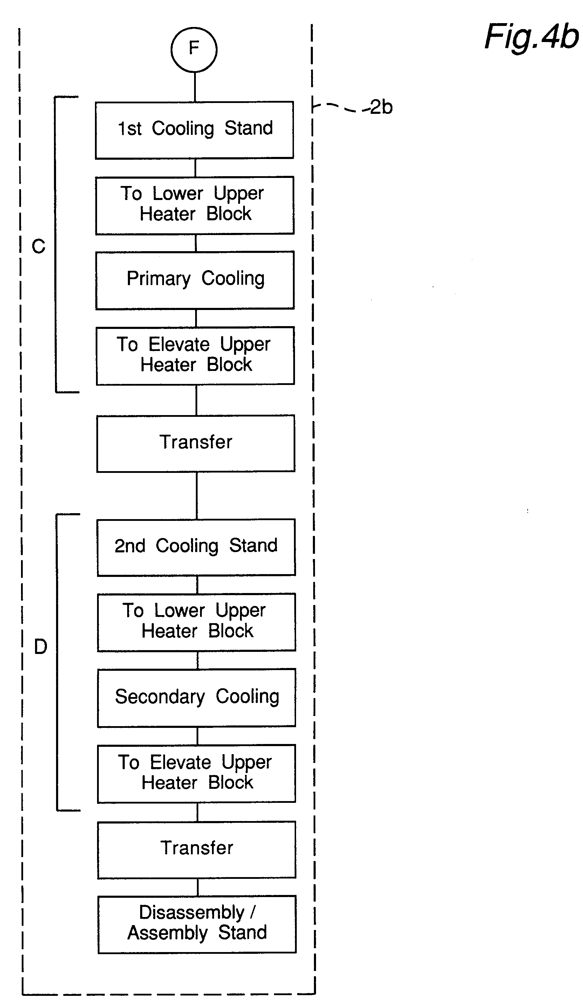

Fig. 4 is a flowchart showing the sequence of molding according to the present invention;

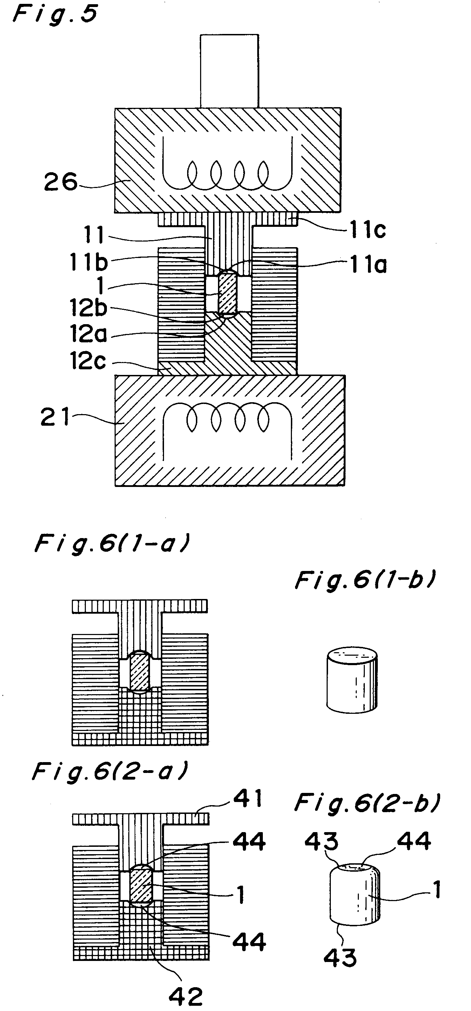

Fig. 5 is a schematic sectional view of a mold assembly at a second preheating stand;

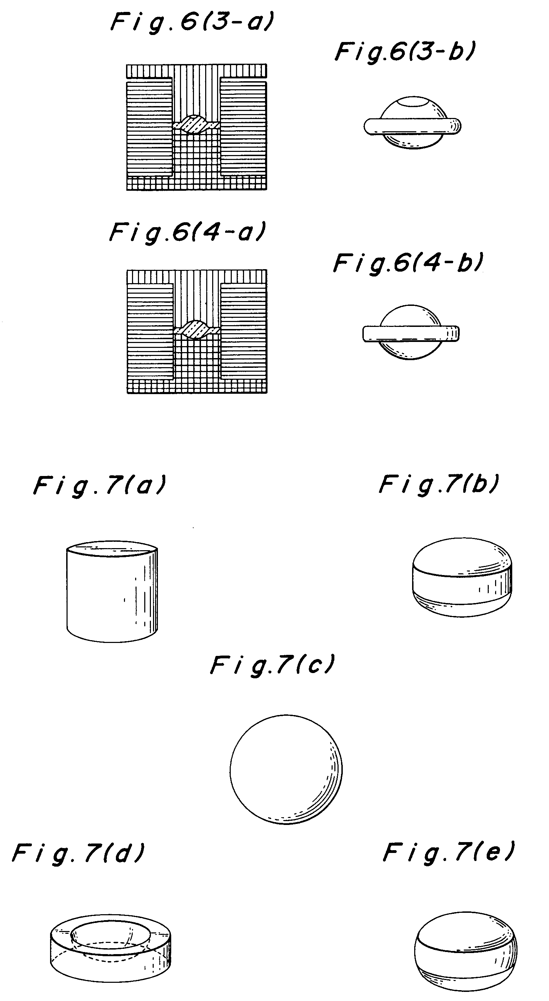

Figs. 6(1-a), 6(2-a), 6(3-a) and 6(4-a) are schematic sectional views showing different conceptions of the molding method of the present invention;
Figs. 6(1-b), 6(2-b), 6(3-b) and 6(4-b) are schematic perspective views showing molded optical elements formed by the mold assemblies shown in Figs. 6(1-a), 6(2-a), 6(3-a) and 6(4-a), respectively;
Figs. 7(a) to 7'e) are schematic perspective views showing different optical raw materials which can be used in the execution of the molding method of the present invention;

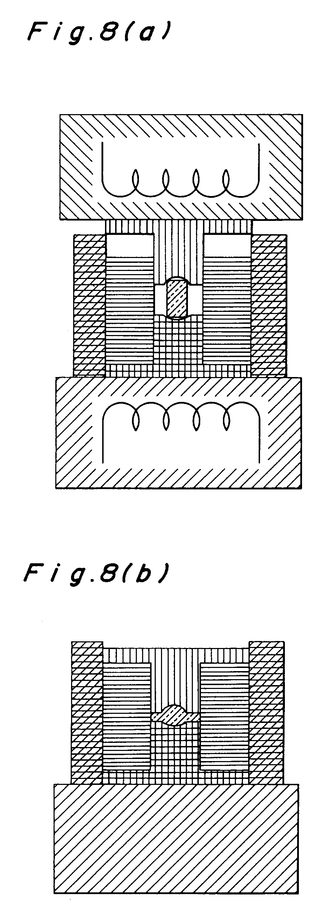

Figs. 8(a) and 8(b) are schematic sectional views showing the mold assembly in different operative positions, respectively;

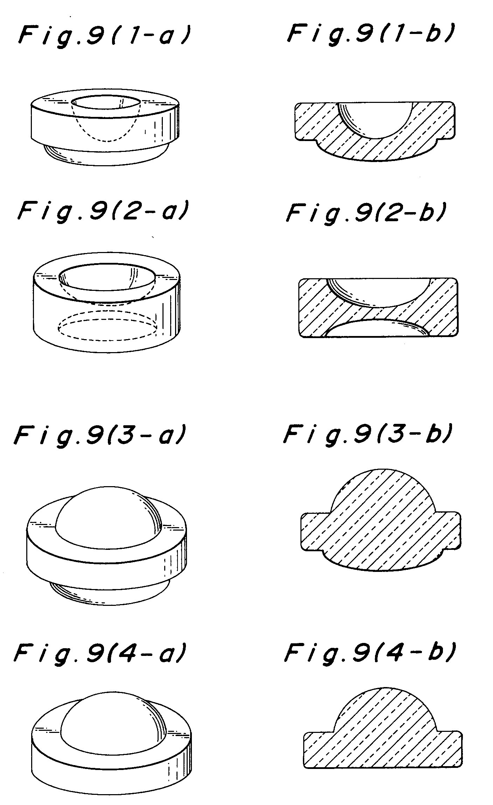

Figs. 9(1-a), 9(2-a), 9(3-a) and 9(4-a) are schematic perspective views showing different optical elements;
Figs. 9(1-b), 9(2-b), 9(3-b) and 9(4-b) are schematic sectional views showing the optical elements shown in Figs. 9(1-a), 9(2-a), 9(3-a) and 9(4-a), respectively; and
Fig. 10 is an elevational view, with a portion shown in section, of the prior art molding machine.

### DETAILED DESCRIPTION OF THE EMBODIMENTS

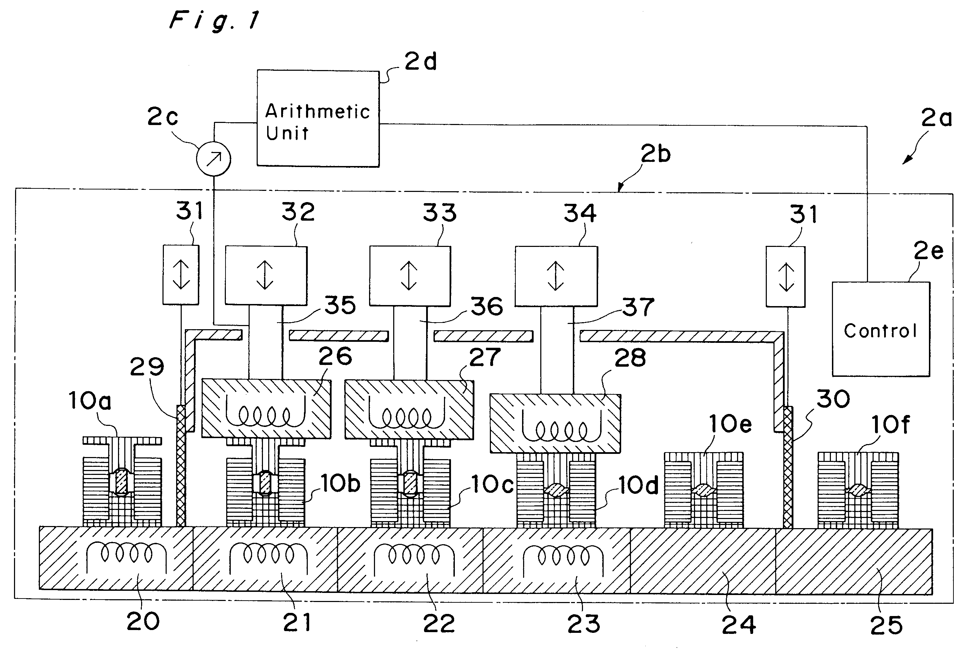

Referring to Figs. 1 to 6 pertaining to a first preferred embodiment of the present invention, and particularly to Fig. 1, a molding machine 2b for performing a molding method of the present invention comprises a first preheating stand 20, a second preheating stand 21, a molding stand 22, a first cooling stand 23, a second cooling stand 24, a disassembly/assembly stand 25, and upper heater blocks 26, 27 and 28 associated with the stands 21, 22 and 23, respectively. The stands 20 to 23 and the upper heater blocks 26 to 28 have respective heaters incorporated therein, the temperature of which can be controlled. A mold assembly 10 includes upper and lower molds 11 and 12, and a barrel mold 14 adjusted to an arbitrary height so as to avoid any possible axial misalignment between the upper and lower molds 11 and 12 and also so as to render an optical element to have a predetermined thickness. In consideration of productivity, the mold assembly is provided in a plural number. Reference numerals 10a to 10f represents six mold assemblies which are held in respective conditions assumed at the end of a molding tact. A concept of the molding process according to the illustrated embodiment of the present invention and a temperature profile of the mold assembly are shown in Figs. 3(a) and 3(b), respectively. The molding process comprises, mainly, preheating steps, a molding step and cooling steps and, in the practice of the illustrated embodiment, the molding machine provided with two preheating stands, a single molding stand and two cooling stands was employed. Each of these stands is controlled beforehand to attain a predetermined temperature. Change in molding temperature during a period in which the mold assembly 10 is transferred through the various stands 21 to 24 of the molding machine is such as shown in Fig. 3(b).

The total height, the outer diameter and others of the mold assembly described above are uniformly supervised in the order of microns. The heater blocks 25, 26 and 27 above the respective stands are coupled with associated cylinder rods 35 to 37 and capable of being selectively lifted and lowered by corresponding air-cylinders 32 to 34 and apply a desired pressure to the upper molds 11 through the upper heater blocks. At the preheating stand 21, the cylinder rod 26 is provided with a measuring instrument 2c for measuring the amount of displacement of an optical element. The measuring instrument is used to measure the amount of displacement of the optical element within the mold assembly at the preheating stand 21 and outputs data which are subsequently supplied to an arithmetic unit. A flow of these data is shown in a molding flowchart shown in Fig. 4. After optimum conditions for the molding stand have been selected by the arithmetic unit, conditions are instructed to a machine control unit 2e. The molding stand 22 of the molding machine operates according to a command x (Fig. 4) generated from the machine control unit. As shown by y in Fig. 4, it is possible to vary conditions for the first cooling stand. Shutters 29 and 30 are simultaneously elevated by the respective air-cylinders 31 at the end of the molding tact time and are lowered after the mold assembly has been transferred onto the next adjacent stand to shield the interior of the molding machine from the outside. The interior of the molding machine is supplied with a nitrogen gas to render it to be an reducing atmosphere. This is for the purpose of suppressing oxidization of the mold assembly and the interior of the molding machine. An optical raw material 1 is a cylindrical block such as shown in Fig. 7(a). Various shapes of the optical raw material can be contemplated as shown in Fig. 7, wherein Fig. 7(b) illustrates a double convexed block, Fig. 7(c) illustrates a ball block, Fig. 7(d) illustrates a plano-concave block and Fig. 7(e) illustrates a glass cob, the use of the cylindrical block shown in Fig. 7(a) is preferred because of a low cost for the production in the manner described hereinbefore. In the illustrated embodiment, an optical glass SF-8 of 5 mm in diameter and 6 mm in length (having a glass transition temperature of 420°C, a yield temperature of 456°C and a coefficient of linear thermal expansion of 90 × 10⁻⁷/°C at 100 to 300°C) was employed as the optical raw material. Temperature settings within the molding machine are as shown in Table 1. The upper heater blocks 26 to 28 were adjusted to the same temperatures as the preset temperatures T1 to T3 of the associated stands.

**Table 1**

| | Sites | | | |
|---|---|---|---|---|
| | T0 | T1 | T2 | T3 |
| Temperature Settings | 70°C | 530°C | 530°C | 400°C |

The optical raw material has its side face finished by the use of a centerless grinding technique to a surface roughness of not greater than 3 µm. This optical raw material also has flat surfaces mirror-polished by the use of a grinding technique to a surface roughness of not greater than 0.1 µm. Since the optical raw material used in the illustrated embodiment is polished as hereinabove described and has little variation in thickness, little variation is found in weight of the optical raw materials. When this optical raw material undergoes a total displacement of 2mm before the optical raw material is molded under pressure and the molding thereof completes. During the course of molding of the cylindrical block, closed spaces 11b and 12b are formed between an upper flat surface of the optical raw material and a cavity defining surface 11a of the upper mold 11 and a lower flat surfaces of the optical raw material and a cavity defining surface 12a of the lower mold 12, respectively, as shown in Fig. 5. The manner in which the cylindrical block being molded deforms is shown in Fig. 6 wherein Fig1. 6(1-a) and 6(1-b) illustrate the displacement of the optical raw material within the mold assembly and Figs. 6(2-a) and 6(2-b) illustrate a transformation of the optical raw material into an optical element. As shown in Figs. 6(2-a) and 6(2-b), opposite edge portions 43 of the optical raw material are first deformed to conform to respective surface regions of the upper and lower molds 41 and 42, creating closed spaces (only one of which is shown by 44). Once these closed spaces are formed, they exist up until the molding completes, posing a problem in that the shapes of the cavity defining surfaces of the upper and lower molds will not be satisfactorily transcribed onto the optical raw material and a defective optical element will result in.

Hereinafter, the molding procedure will be described. After the optical raw material has been introduced into the mold assembly in the manner described hereinbefore, the mold assembly 10a is transferred to the first preheating stand 20 within the molding machine and then to the second preheating stand 21 within the molding machine. As a means for transferring the mold assembly, the use is made of such a transfer arm assembly as shown by 40 in Fig. 2. Figs. 2(a-1) and 2(a-2) illustrate a condition in which the transfer arm assembly is held at a rear position thereby to avoid any possible contact of the transfer arm assembly with the mold assembly. After the passage of a molding tact time, the transfer arm assembly advances to a position close to the stands 20 to 24 as shown in Figs. 2(b-1) and 2(b-2). Thereafter, the transfer arm assembly are moved together with the mold assembly towards the disassembly/assembly stand 25 and, after the mold assembly has been transferred, retract to the initial position as shown in Figs. 2(a-2) and 2(a-2).

After the mold assembly has been transferred to the second preheating stand, the upper heater block 25 is brought into contact with the upper mold 11. While the upper heater block and the lower heater block are required to be heated to a temperature sufficient to cause the glass material to be sufficiently deformed by the application of a pressing force of the mold, it is recommended for them to be heated to a temperature intermediate between the yield temperature of the material and the softening temperature thereof since, if they are heated to an unnecessarily high temperature, the optical element failing to satisfy the desired performance will result in. In the illustrated embodiment, as shown in Table 1, the upper heater block 25 and the preheating stand 21 were heated to 530°C. At the time the temperature of the optical raw material attains a temperature of about 530°C, the optical raw material exhibits a viscosity of 10⁹ poises. The optical raw material does, when heated to a temperature exceeding the yield temperature of glass, deform little by little under the influence of the weight of the upper heater block. The amount of this displacement is measured by the measuring instrument 2c which generate instructions so that molding conditions at the next succeeding molding stand can be modified to optimum molding conditions in dependence on the amount of the displacement. In the illustrated embodiment, while six mold assemblies have been employed, the total amount of displacement which takes place at the preheating stand 21 for each mold assembly is shown in Table 2.

**Table 2**

| Mold Assembly No. | Total Amount of Displacement (µm) |
|---|---|
| 10a | 50 |
| 10b | 45 |
| 10c | 67 |
| 10d | 80 |
| 10e | 28 |
| 10f | 35 |

As shown in Table 2, since the speed of increase of the temperature varies from one mold assembly to another, the speed of displacement of the optical raw material varies correspondingly and so does the amount of displacement at the preheating stand 21. In order to eliminate the closed spaces 11b and 12b between the flat surface regions of the optical raw material and the cavity defining surfaces 11a and 12a of the upper and lower molds 11 and 12 and to allow the respective shapes of the cavity defining surfaces 11a and 12b to be faithfully transcribed onto the flat surface areas of the optical raw material, it has been clarified during the course of our discussion that they can be accomplished by modifying the molding conditions to the optimum molding conditions for each of the mold assembly at the molding stand. The total amount of displacement at the preheating stand and the optimum molding conditions at the molding stand, which were obtained as a result of experiment, are shown in Table 3.

**Table 1**

| Total Amt. of Displacement at First Preheating Stand | Molding Conditions for Molding Stand | | |
|---|---|---|---|
| | Molding Pressure (Kg.cm²) | No. of Cycles of Pressure Application | Time of One Cycle of Pres. Appln. (sec) |
| 20 to 40 | 5 | 3 | 10 |
| 40 to 60 | 4.5 | 4 | 10 |
| 60 to 80 | 4 | 4 | 10 |
| 80 to 100 | 3.5 | 4 | 8 |
| 100 to 120 | 3 | 5 | 8 |

In the illustrated embodiment, the total amount of displacement that took place in the mold assembly No. 1 was 85 µm. From Table 3, it is clear that the optimum molding pressure is 3.5 Kg/cm², the number of application of a pressure is 4, and the time during which the pressure is applied is 8 seconds. In the illustrated embodiment, the molding conditions are modified according to the molding flowchart shown in Fig. 4, and the data shown in Table 3 have been inputted beforehand in the arithmetic unit 2d. In other words, the data on the amount of displacement in each of the mold assembly which have been measured by the measuring instrument 2c installed on the preheating stand 21 are supplied to the arithmetic unit 2d and, within the arithmetic unit, the molding conditions are selected from the data inputted thereto and shown in Table 3 thereby to generate instructions to the machine control unit 2e so that the molding conditions for the molding stand 22 are modified.

Hereinafter, the molding in the mold assembly 10a at the molding stand 22 will be described. After the lapse of 8 seconds subsequent to the first application of pressure, the molding pressure is zeroed and the upper heater block is elevated to separate from the upper mold. Immediately before the molding pressure is zeroed, a space defined between the mold, then assuming a positive pressure, and each of the flat surfaces of the optical raw material attains normal pressures. Even when the molding pressure is zeroed, the optical raw material remains held in contact with the mold assembly. Thereafter, the upper heater block is again lowered to tightly contact the upper mold to perform a second cycle of pressure application. After the lapse of further 8 seconds, the molding pressure is again zeroed and the upper heater block is again elevated to separate from the upper mold. Immediately before the molding pressure is zeroed, a space defined between the mold, then assuming a positive pressure, and each of the flat surfaces of the optical raw material attains normal pressures. At this time, the space between each flat surface of the optical raw material and the cavity defining surface of each molds has been reduced to a value smaller than that at the start of the second cycle of pressure application. Similarly, the foregoing procedure is repeated four cycles to allow the shapes of the respective cavity defining surfaces of the upper and lower molds to be faithfully transcribed onto the flat surfaces of the optical raw material. 60 seconds after the start of the first cycle of pressure application, the mold assembly is transferred onto the first cooling stand 23 then set at a temperature of 400°C. At the first cooling stand, the upper heater block is lowered to contact the upper mold. After the lapse of 60 seconds, the upper heater block is elevated to terminate the pressure application. Following this, the mold assembly 10 is transferred onto the second cooling stand 24. After the passage of further 60 seconds, the mold assembly is transferred to the disassembly/assembly stand 25 positioned outside the molding machine and is allowed to cool to normal temperatures. After the cooling of the mold assembly down to the normal temperatures, the upper and lower molds of the mold assembly is separated to remove the completed optical element, followed by a supply of the next succeeding optical raw material. As is the case with the mold assembly 10a, the optimum molding conditions for each of the mold assemblies 10b to 10f are calculated by the arithmetic unit 2d from the respective amount of displacement at the associated second preheating stand to modify the molding conditions for the molding stand.

The optical element molded in the manner described above is such as shown in Figs. 9(1-a) and 9(1-b), having met a design shape accurately and having an excellent optical characteristics. It is to be noted that, although the optical raw material used in the illustrated embodiment has been described having its flat surfaces mirror-polished by grinding, an optical raw material of a cylindrical configuration having split surfaces may be employed.

Hereinafter, a second preferred embodiment of the present invention will be described. The molding machine used therein is identical with that used in the first preferred embodiment of the present invention and the mold assemblies are sequentially transferred from one stand to another so that preheating, molding and cooling are successively performed. The structure of each of the upper and lower molds is identical with that used in the first preferred embodiment of the present invention and, in consideration of the mass-productivity, a plurality of mold assemblies are provided so that, after introduction of an optical raw material, they are transferred into the molding machine as desired.

The details of this embodiment will now be described. The optical raw material is in the form of a glass cob, as shown in Fig. 7(e), which was prepared by melting an optical glass LF-7 (having a glass transition temperature of 423°C, a yield temperature of 457°C and a coefficient of linear thermal expansion of 107 × 10⁻⁷/°C at 100 to 300°C) and then dropping the melt glass into a receptacle. The total amount of deformation which takes place after the molding of the optical raw material under pressure and before completion of the molding is about 2.5 mm. Temperature settings within the molding machine are as shown in Table 4. The upper heater blocks were adjusted to the same temperatures as the preset temperatures of the associated stands.

**Table 4**

| | Sites | | | |
|---|---|---|---|---|
| | T0 | T1 | T2 | T3 |
| Temperature Settings | 70°C | 500°C | 500°C | 400°C |

The glass cob referred to above is introduced into the mold assembly. Subsequently, the mold assembly is transferred onto the first preheating stand 21 heated to 500°C and positioned within the molding machine 20, and the upper heater block 25 is lowered and is then retained at a lowered position for 60 seconds. At this time, the upper heater block 25 is held in contact with the mold, applying the weight of the upper heater block to the glass cob. The glass cob deforms little by little under the influence of the weight of the upper heater block when it exceeds the yield temperature of the glass material. This amount of displacement is measured by means of the measuring instrument. Unlike that in the first embodiment of the present invention, in addition to a variation in heat capacity of the mold assembly, since a variation in weight of the glass cob is large as compared with that of the optical raw material employed in the first embodiment of the present invention, the amount of displacement varies greatly. The relationship between the total amount of displacement at the preheating stand and the optimum molding pressure at the molding stand is shown in Table 5. Selection of the optimum molding conditions is carried out by means of the arithmetic unit as is the case in the first embodiment of the present invention. The total amount of displacement of the optical raw material in the mold assembly No. 1 at the first preheating stand used in this illustrated embodiment is 50 µm, and the optimum molding pressure at the molding stand at this time is 5.5 Kg/mm² as shown in Table 5. In practice, the optimum conditions are selected by the arithmetic unit 2d and the molding pressure at the molding stand 22 was modified.

**Table 5**

| Total Amt. of Displacement at Preheating Stand (µm) | Molding Pressure at Molding Stage (Kg/cm²) |
|---|---|
| 0 to 20 | 6.5 |
| 20 to 40 | 6 |
| 40 to 60 | 5.5 |
| 60 to 80 | 5 |
| 80 to 100 | 4.5 |
| 100 to 120 | 4 |
| 120 to 140 | 3.5 |

The mold assembly No. 1 is transferred from the first preheating stand onto the molding stand, and then the molding is effected by the modified molding pressure. After the passage of 60 seconds and before the mold assembly is transferred onto the first cooling stand 23, the molding under pressure is effected to accomplish a total deformation size of 2.4 mm. Thereafter, at the first cooling stand 23, the upper heater block is lowered to contact the upper mold. The temperature of the first cooling stand 23 has been set to 400°C. After the passage of 60 seconds, the upper heater block is elevated thereby to terminating the application of the molding pressure. Thereafter, it is transferred onto the second cooling stand and, after the passage of 60 seconds, the mold assembly is removed out of the molding machine and is allowed to cool to normal temperatures, followed by separation of the upper and lower molds for the removal of the completed optical element. Simultaneously with the transfer of the mold assembly No. 1 to the first cooling stand 23, the mold assembly No. 2 at the preheating stand 21 is transferred onto the molding stand 22. The total amount of displacement of the optical raw material in the mold assembly No. 2 at the preheating stand 21 was 125 µm, and the optimum molding pressure at the molding stand at this time is 3.5 Kg/mm² as shown in Table 5, and therefore, instructions were issued to permit the molding pressure to attain 3.5 Kg/mm². The molding at the molding stand 22 is carried out in the same manner as the mold assembly No. 1, and after 60 seconds, the mold assembly No. 2 is transferred onto the cooling stand. Even at the cooling stand 23, the mold assembly is, after having pressurized and cooled in the same manner as the mold assembly No. 1, transferred ont the second cooling stand 24 and, after the passage of 60 seconds, the mold assembly is removed out of the molding machine, followed by cooling thereof down to normal temperatures before the upper and lower molds are separated from each other for the removal of the completed optical element. In the manner described above, the mold assemblies are sequentially transferred for molding. The molded optical element was found to satisfying a design shape, exhibiting an excellent optical characteristic. Although in this illustrated embodiment the optimum molding conditions were selected from the amount of displacement of the optical raw material at the preheating stand, similar effects can be obtained even when a surface temperature of the optical raw material or the mold assembly at the first preheating stand so that the molding conditions at the molding stand can be modified according to the value of the temperature so measured. Also, although in the illustrated embodiment no pressure release time is specified, a highly precise optical element can be obtained if the pressure release time is specified for each mold assembly. Moreover, effects are large if the molding conditions for not only the molding stand, but also for the first cooling stand are modified to the optimum conditions for each mold assembly. Again, the molding can equally be accomplished even if the mold assembly is of a double barrel structure as shown in Fig. 8 wherein Fig. 8(a) illustrates the mold assembly at the second preheating stand and Fig. 8(b) illustrates the mold assembly at the second cooling stand. Representative shapes of the optical elements are shown in Fig. 9 wherein Fig. 9 wherein Figs. 9(1-a) and 9(1-b) show the optical element of a meniscus shape, Figs. 9(2-a) and 9(2-b) show the optical element of a double-concave shape, Figs. 9(3-a) and 9(3-b) show the optical element of a double convex shape, and Figs. 9(4-a) and 9(4-b) show the optical element of a plano-convex shape. The molding method of the present invention is effective to manufacture not only the optical element of an axially symmetric shape, but also that having a toric surface or an inclined surface such as observed in a prism.

Although the present invention has been described in connection with the preferred embodiments thereof, various changes and modifications falling within the scope of the present invention as defined by the appended claims are to be understood as included therein.

## Claims

1. A molding machine for making an optical element by introducing an optical raw material into a mold assembly comprising first and second molds, heating to soften the optical raw material and applying pressure to the softened optical raw material, said machine comprising:
a measuring instrument for measuring either the amount of displacement of the optical raw material or the temperature of one of the optical raw material and the mold assembly during a course of molding;
an arithmetic unit for selecting molding conditions during steps subsequent to the measurement and to transmit to a machine control unit molding conditions to be modified; and
said machine control unit being operable to transmit to the molding machine the molding conditions to be modified which have been selected by the arithmetic unit.

2. The molding machine as claimed in Claim 1, wherein during the steps subsequent to the measurement of either the amount of displacement of the optical raw material or the temperature of one of the optical raw material and the mold assembly, at least one of the molding conditions including a molding temperature, a molding pressure, a pressure applying time, a pressure release time and a cycle of pressure application is modified.

3. The molding machine as claimed in Claim 1, wherein, in a process comprising a preliminary heating step, a molding step and a cooling step or a process including a plurality of preheating steps, a molding step and a cooling step, the measurement of either the amount of displacement of the optical raw material or the temperature of one of the optical raw material and the mold assembly is carried out during the preheating step so that the molding conditions during one of the pressure applying step and the cooling step are modified.

4. A method of molding an optical element from an optical raw material which comprises the steps of:
inserting the optical raw material in a mold assembly including first and second molds;
heating the optical raw material to soften;
applying pressure to the softened optical raw material; and
measuring either the amount of displacement of the optical raw material being molded or the temperature of one of the optical raw material being molded and the mold assembly so that at least one of molding conditions to be employed subsequent to the measurement can be modified.

5. The method of molding the optical element as claimed in Claim 4, wherein during the steps subsequent to the measurement of either the amount of displacement of the optical raw material or the temperature of one of the optical raw material and the mold assembly, at least one of the molding conditions including a molding temperature, a molding pressure, a pressure applying time, a pressure release time and a cycle of pressure application is modified.

6. The method of molding the optical element as claimed in Claim 4, wherein, in a process comprising a preliminary heating step, a molding step and a cooling step or a process including a plurality of preheating steps, a molding step and a cooling step, the measurement of either the amount of displacement of the optical raw material or the temperature of one of the optical raw material and the mold assembly is carried out during the preheating step so that the molding conditions employed during steps subsequent to the preheating step are modified.

7. The method of molding the optical element as claimed in Claim 4, wherein the optical raw material is a cylindrical optical block having cut surfaces, ground surfaces or split surfaces and also having flat surfaces opposite to each other, said optical raw material being inserted in the mold assembly with the flat surfaces facing the first and second molds, respectively.

8. An optical element obtained by a method which comprises the steps of inserting an optical raw material in a mold assembly including first and second molds, heating the optical raw material to soften, applying pressure to the softened optical raw material, and measuring either the amount of displacement of the optical raw material being molded or the temperature of one of the optical raw material being molded and the mold assembly so that at least one of molding conditions to be employed subsequent to the measurement can be modified.

9. The optical element as claimed in Claim 8, wherein during the steps subsequent to the measurement of either the amount of displacement of the optical raw material or the temperature of one of the optical raw material and the mold assembly, at least one of the molding conditions including a molding temperature, a molding pressure, a pressure applying time, a pressure release time and a cycle of pressure application is modified.

10. The optical element as claimed in Claim 8, wherein, in a process comprising a preliminary heating step, a molding step and a cooling step or a process including a plurality of preheating steps, a molding step and a cooling step, the measurement of either the amount of displacement of the optical raw material or the temperature of one of the optical raw material and the mold assembly is carried out during the preheating step so that the molding conditions during one of the pressure applying step and the cooling step are modified.

11. The optical element as claimed in Claim 8, wherein the optical raw material is a cylindrical optical block having cut surfaces, ground surfaces or split surfaces and also having flat surfaces opposite to each other, said optical raw material being inserted in the mold assembly with the flat surfaces facing the first and second molds, respectively.
